Europäisches Patentamt

European Patent Office

Office européen des brevets

(11) Publication number: **0 519 127 A1**

# (12) EUROPEAN PATENT APPLICATION

(21) Application number: **91305446.6**

(22) Date of filing: **17.06.91**

(51) Int. Cl.⁵: **A23C 9/13**

(43) Date of publication of application:
**23.12.92 Bulletin 92/52**

(84) Designated Contracting States:
**BE CH DE DK FR GB LI NL SE**

(71) Applicant: **MORINAGA MILK INDUSTRY CO.,
LTD.
33-1, Shiba 5-chome
Minato-ku, Tokyo(JP)**

(72) Inventor: **TOMITA, Mamoru
1-47-8, Higashi-asahina, Kanazawa-ku
Yokohama-shi Kanagawa(JP)**
Inventor: **SHIMAMURA, Seiichi
1558, Shinohara-cho Kohoku-ku
Kanagawa(JP)**
Inventor: **TOMIMURA, Toshio
5-12-4-103, Isobe
Chiba-shi, Chiba(JP)**
Inventor: **ISHIBASHI, Norio
2-3-21, Shinmei-minami Adachi-ku
Tokyo(JP)**
Inventor: **MIYAKAWA, Hiroshi
4-7-21, Ohfuna,
Kamakura-shi, Kanagawa(JP)**

(74) Representative: **Holmes, Michael John et al
Frank B. Dehn & Co. Imperial House 15-19
Kingsway
London WC2B 6UZ(GB)**

(54) **Yoghurt containing high purity whey proteins.**

(57) A process for producing yogurt which comprises adding highly purified whey proteins with a purity of at least 90% (by weight) to the raw material for production of yogurt or fermented products of said material in a ratio of at least 0.6% (by weight) of their total protein content, whereby whey separation in the final product is effectively prevented and the final product having good texture and taste is obtained without injury to the concept of yogurt as a healthy food.

EP 0 519 127 A1

The present invention relates to a process for producing yogurt. More particularly, the present invention relates to an improved process for producing yogurt which comprises adding highly purified whey proteins to the raw material for production of yogurt or fermented products of said material whereby whey separation in the final product is effectively prevented and the final product having good texture and taste is obtained.

In general, yogurt is paste-like or liquid, and made by fermenting animal milk or raw material for production of yogurt containing milk solids equal or more than those of animal milk with lactic acid bacteria and/or yeast. Depending upon the composition of the product, yogurt can be classified into, for example:

(1) Natural yogurt consisting only of animal milk components;

(2) Flavored yogurt with added chocolate, coffee extract, sugar, flavoring materials, or stabilizers;

(3) Fruit yogurt with fruit.

Yogurt can also be categorized, according to its properties and manufacturing processes, as, for example:

(1) Solid type yogurt (set yogurt);

(2) Paste-like yogurt (stirred yogurt);

(3) Liquid type yogurt (drinking yogurt).

Actually, in the food industry, by combining these compositions, properties, and manufacturing processes, many kinds of yogurt suiting the preferences largely held almost wholly in common by various age groups, from children to adults to the aged, have been manufactured. However, it is not so simple or easy to produce delicious yogurt that has an appropriate solidity and viscosity, a smooth feel to the tongue, and that melts pleasantly in the mouth. What is more, for instance, one often sees yogurt in which, prior to the product's expiration date, the whey separation is observed, thereby its quality is seriously impaired. Thus, in order to solve these problems, it has been quite common practice (a) to add milk components such as skim milk powder, casein, or whey proteins with low purity; (b) to add thickeners such as sodium alginate, gelatin, agar, or gum; or (c) to add milk components and thickeners. However, it is required in the above method (a) that the addition of great amounts of milk components in order to obtain a sufficient effect, and the addition of such large amounts of milk components causes the deterioration of taste in yogurt, and an increase in manufacturing costs. On the other hand, although an amount of addition of milk components in the above methods (b) and (c) are lower than that of method (a), the concept as healthy food of the yogurt prepared by the above methods (b) and (c) is remarkably lost because of including additives other than milk components.

In view of the above prior art, the inventors of the present invention have made efforts to develop a new process for producing yogurt which does not cause whey separation and does not contain ingredients other than milk components. As a result, the inventors discovered that whey separation in the final product was effectively prevented by addition of highly purified whey proteins to raw material for production of yogurt or fermented products of said raw material.

Accordingly, it is an aim of the present invention to provide an improved process for producing yogurt without whey separation which causes deterioration of quality in yogurt.

It is a further aim of the present invention to provide a yogurt without injury to the concept of yogurt as a healthy food.

The present invention relates to an improved process for producing yogurt which comprises adding highly purified whey proteins with a purity of at least 90 percent (by weight) (hereinafter referred to as percent for abbreviation) to the raw material for production of yogurt or fermented products of said material in a ratio of at least 0.6% of their total protein content, whereby whey separation in the final product is effectively prevented.

The aforementioned highly purified whey proteins used in the present invention can be prepared, for example, by the following procedure.

The sweet whey or acid whey produced when making cheese or casein, the whey powder made by processing them, whey protein concentrates, or any desired mixtures of these (hereinafter these shall all be referred to as "whey"), are contact with a weakly acidic cation exchanger having a carboxymethyl group, for example CM-Sephadex C-50 (trademark; sold by Pharmacia Co.) or a weakly basic ion exchanger having a diaminoamylethyl group, for example DEAE-Sephadex A-50 (trademark; sold by Pharmacia Co.), and the proteins in the whey are adsorbed with the ion exchanger. The ion exchanger is then separated and washed with water to completely remove the unadsorbed whey components. Then, the ion exchanger is treated with aqueous solution of salt selected from a group consisting of sodium chloride, potassium chloride, magnesium chloride, and any desired mixture thereof, and the adsorbed protein is eluted from the ion exchanger.

The eluate is concentrated with an ultrafiltration device, and adjusted the salt content to 2 percent or less, thus the required highly purified whey proteins are obtained. The highly purified whey proteins can be used in the process for the present invention as the solution. The powdered form of highly purified whey proteins prepared by spray drying or freeze drying in order to prolong shelf life is also used in the present invention. The highly purified whey proteins have acceptable taste, and also have excellent gelling, whipping, and emulsifying properties.

Additionally, in using these highly purified whey proteins for the present invention, their purity should be at least 90 percent. Where their purity is less than 90 percent, the desired effect in the final product cannot be obtained.

In producing yogurt with the process of the present invention, highly purified whey proteins prepared by according to the aforementioned procedures are added either to the raw material for production of yogurt, or to fermented products of said raw material. When adding highly purified whey proteins to said raw material, powdered form of highly purified whey proteins are added and dissolved, while solution of highly purified whey proteins are added and mixed. When adding highly purified whey proteins to fermented products of said raw material, powdered form of highly purified whey proteins are added and mixed after dissolving them in water and solution of highly purified whey proteins are added and mixed with fermented products of said raw material. The amount of highly purified whey proteins added should be at least 0.6 percent of the total amount of proteins in the raw material for production of the yogurt or fermented products of said raw material, and preferably from 1.5 to 15.0 percent.

The form of the yogurt to which highly purified whey proteins are added with the process of the present invention may be solid, paste-like, or liquid, and the lactic acid bacteria used for fermentation may be of any kind, as long as they are used in the manufacture of fermented milk products. There is no limitation in particular on the species.

(Test 1)

First the effect of the purity of the whey proteins used with the present invention was tested.

1) Preparation of sample

The compositon of the whey proteins used is shown in table 1. Highly purified whey proteins were prepared by the same method as used in Example 1, while the MILACTEAL 75 (Trade name: made by the Milei company of Germany), HIPROTAL (made by the Domo Co. of Holland), and whey powder (made by Morinaga), are all commercial products. MILACTEAL 75 and HIPROTAL are both manufactured by ultrafiltrating cheese whey to concentrate its whey proteins, and finally spray drying. The whey powder is produced by spray drying cheese whey as is.

The raw material for production of yogurt was prepared adding powder form of highly purified whey proteins (0.3%), MILACTEAL 75 (0.36%), HIPROTAL (0.6%), and whey powder (2.25%) separately to each 1 kilogram of commercial milk (total protein content: 3%. The ratio of whey protein to the total protein in the raw material was in all cases, 9%). These mixtures were pasteurized for 10 minutes at 90°C, yogurt starter CH-1 (made by CHR.Hansen Laboratory) was added at rate of 0.01%, and mixed uniformly. Each 100ml of the mixture was poured into beakers with 120ml volume, and were covered with aluminum foil, then fermented for 3 hours at 42°C in an incubator to prepare four kinds of natural yogurt. To obtain a control sample, natural yogurt was also prepared by the above same method using same raw material without adding any additional ingredients.

2) Experimental Method

Each yogurt sample was stored for 14 days at 5°C in a cooling room. Immediately after manufacturing, on days 4, 7, 10, and 14, to examine the effect of the addition of the whey proteins, each sample was subjected to organoleptic test on taste and visual observation of whey separation by 10 panelists (consisting of 5 men and 5 women).

The taste was rated on the following basis: good, fair, or poor, and the whey separation was rated on the basis noted on the margin of Table 2. The table shows evaluations by more than 80% of the panelists.

3) Results

The results of the test are shown in Table 2. The taste of the control sample without adding whey proteins was evaluated as good even after they were stored for 14 days; but immediately after manufacturing, slight whey separation was observed. Whey separation of control sample steadily proceeded after 4th day, and on the 10th day yogurt had no merchandise value. The sample containing highly purified whey proteins on the other hand, still had good taste and no whey separation was observed after being stored for

3

14 days.

The taste of the sample containing MILACTEAL 75 slightly deteriorated after 14 days of storage, whey separation was markedly observed, and its value as merchandise was lost. The evaluation of the samples with HIPROTAL and whey powder to prevent whey separation was no better than that of the control sample, and the taste of the sample prepared by adding whey proteins with low purity quickly deteriorated.

These results indicate that differences in both the purity of the whey proteins and their manufacturing procedure result in slight differences in the content of lactose, or the content and the type of ash and whey proteins which coexist in the products of these processes, and that it is not possible to prevent whey separation and produce good tasting yogurt even if the ratio of the whey protein to the total protein content of the raw material for production of yogurt is coordinated. In the case of adding 4 kinds of whey proteins to the fermented products the similar results were obtained. Accordingly, it is essential that the purity of highly purified whey proteins to be used in the present invention are at least 90 percent.

Next, the results of a experiment carried out to determine the optimum proportions of the highly purified whey proteins added to the raw material for production of yogurt, or fermented products of said raw material are described.

(Test 2)

The effect of adding highly purified whey proteins to raw material for production of yogurt were tested.

(1) Preparation of samples

Raw material for production of yogurt was prepared by adding powdered form of highly purified whey proteins (purity of 90 percent), obtained by the same method as described below in Example 1, to 1Kg each of ordinary marketed milk (total protein amount of 3.0 percent) in the proportions of 0, 0.02, 0.05, 0.1, 0.2, 0.3, 0.4, and 0.5 percent (the proportions of highly purified whey proteins to the total amount of proteins in the raw material were 0, 0.6, 1.5, 3.0, 6.0, 9.0, 12.0, and 15.0 percent, respectively), the raw materials were pasteurized at 90°C for 10 minutes, cooled to 42°C, and 0.01 percent of the yogurt starter CH-1 (sold by CHR.Hansen Laboratory) was added to each raw material and mixed uniformly. Each 100ml of thus obtained liquid mixture was poured into beakers with 120ml volume, were covered with aluminum foil, and fermented for three hours at 42°C in an incubator, thereby eight kinds of solid type natural yogurt samples were prepared.

(2) Experimental Method

Each sample was examined by the same method as used in Test 1 supra.

(3) Results

The results of this test are shown in Table 3. The taste of all samples were acceptable after being preserved for 14 days, but the control sample to which highly purified whey proteins had not been added was already observed slight whey separation at immediately after manufacturing. Whey separation of control sample proceeded after the fourth day, and on the tenth day the yogurt no longer had value as merchandise.

On the other hand, in the case of samples to which the highly purified whey proteins had been added, when the added protein proportion was 0.6 percent of the total protein amount in the raw material, slight whey separation was observed on the first day, but even after preserving for 14 days, whey separation was not observed to the extent that the yogurt would no longer have value as merchandise. And if the proportion added addition was at least 1.5 percent, no whey separation was observed in all samples even after 14 days of preservation.

(Test 3)

Next, another experiment on the effect of adding highly purified whey proteins to fermented products was also carried out.

(1) Preparation of samples

4

Nine kg of ordinary marketed milk (total protein content 3.0 percent) were pasteurized at 90°C for 10 minutes, and cooled to 42°C; 0.01 percent of the yogurt starter CH-1 (made by CHR. Hansen Laboratory) was added and uniformly mixed. After fermenting this liquid mixture for 3 hours at 42°C in an incubator, it was sufficiently stirred and produced a paste-like natural yogurt. Each 1kg of the yogurt was poured into beakers of 1.2 liter capacity. Eighteen percent of aqueous solution containing highly purified whey proteins (purity of 90%), which were prepared by the same method as in Example 1, were added to the yogurt in the ratios of 0, 0.1, 0.25, 0.50, 1.0, 1.5, 2.0, and 2.5 percent and mixed uniformly (the proportions of highly purified whey proteins to the total amount of proteins in the yogurt were 0, 0.6, 1.5, 3.0, 6.0, 9.0, 12.0, and 15.0 percent, respectively). Each 100ml of the mixture was poured into beakers with 120ml volume, were covered with aluminum foil, thereby eight kinds of yogurt samples were prepared.

(2) Experimental Method

Each sample was examined by the same method as used in Test 1 supra.

(3) Results

The results of this test are shown in Table 4. The taste of all samples were acceptable after being preserved for 14 days, but the control sample to which highly purified whey proteins had not been added was already observed slight whey separation at immediately after manufacturing. Whey separation of control sample proceeded after the fourth day, and on the seventh day the yogurt no longer had value as merchandise. On the other hand, in the case of samples to which the highly purified whey proteins had been added, when the added protein proportion was 0.6 percent of the total protein amount in the yogurt, slight whey separation was observed on the fourth day, but even after preserving for 14 days, no whey separation was observed to the extent that the yogurt would no longer have value as merchandise. And if the proportion added was at least 1.5 percent, no whey separation was observed even after 14 days of preservation.

From the results of the foregoing two experiments (Test 2 and Test 3) it was comfirmed that the amount of highly purified whey proteins added, whether the proteins are added to the raw material for production of yogurt, or to fermented products of the raw material, should be at least 0.6 percent of the total protein content, and that 1.5 to 15.0 percent was preferable.

The effects of the present invention are as follows.

(1) Whey separation in the fermented products can be effectively prevented by using highly purified whey proteins.

(2) The yogurt having good texture, acceptable taste, and no whey separation can be prepared without injury to the concept of yogurt as a healthy food.

(3) The value of whey proteins which were by-products of dairy plant in the past, can be remarkably enhanced.

The present invention will be illustrated by the following examples, but it is to be understood that the present invention not limited to these examples.

EXAMPLE 1

Preparation of Highly Purified Whey Proteins Powder

The pH of 16kg of acid whey (pH 4.6) was adjusted to 4.0 with diluted hydrochloric acid. Separately, 30g of the weakly acidic cation exchanger (CM-Sephadex C-50 (trade name; sold by Pharmacia Co.)) was swollen in warm water. To adsorbe whey protein with the ion exchanger, these were mixed and kept by stirring for 2 hours. The ion exchanger was then separated by using a container with a strainer of stainless steel. The ion exchanger was washed with water to remove unadsorbed whey components, and packed into a column. About 1500ml of a 5% sodium chloride solution was passed through the column at a velocity of 2L/hrs. to elute the components which had been adsorbed with the ion exchanger. About 1500ml of eluate were obtained. The eluate was then ultrafiltrated by a filtration device (sold by Danish Sugar Corporation) equipped with an ultrafiltration membrane having a molecular weight cut-off of 20,000 at a circulating flow rate of 8L/min. and an average pressure of $3kg/cm^2$. Water was then added to obtained permeate, and the sodium chloride fraction was removed by diafiltration, thereby approximately 2400ml of aqueous solution containing 18% whey proteins were obtained. The aqueous solution was freeze dried, thus about 40g of powder containing 90% whey proteins was obtained.

EXAMPLE 2

Producing Flavored Yogurt

One hundred kg of skim milk (3.3% total protein), 8kg of sugar, 20g of vanilla flavoring, and 0.1kg of the highly purified whey proteins powder (purity of 90 percent) obtained by the same method as in Example 1 were put into a 150 liter fermenter and dissolved uniformly (the proportion of highly purified whey proteins to the total protein in the mixture was 2.7 percent). After pasteurizing for 10 minutes at 80°C, the mixture was cooled to 42°C, and then 0.01 percent yogurt starter CH-1 (sold by CHR.Hansen Laboratory) was added, and sufficiently mixed. The mixture was poured into 100ml yogurt cups in 90ml amounts, and fermented for three hours at 42°C in a incubation chamber to prepare solid type flavored yogurt. After fermentation was complete, the yogurt was stored at 5°C in a cooling room. Even after 14 days, the taste and texture of the yogurt were acceptable, and no whey separation was observed.

EXAMPLE 3

Producing Natural Yogurt

One hundred kg of skim milk (3.3% total protein) and 0.3kg of the highly purified whey proteins powder (purity of 90 percent) obtained by the same method as in Example 1 were put into a 150 liter fermenter and dissolved uniformly (the proportion of highly purified whey proteins to the total protein in the mixture was 8.2 percent). After pasteurizing for 10 minutes at 80°C, the mixture was cooled to 42°C, and then 0.01 percent yogurt starter CH-1 (sold by CHR. Hansen Laboratory) was added, and the mixture was fermented for three hours. After fermentation was complete, the fermented product was sufficiently stirred while being cooled to 20°C, and poured into 100ml yogurt cups in 90ml amounts. In this way, paste-like natural yogurt was prepared and stored at 5°C in cooling room. Even after 14 days, the taste and texture of the yogurt were acceptable, and no whey separation was observed.

EXAMPLE 4

Producing Fruit Yogurt

One hundred kg of skim milk (3.3% total protein) and 3kg of sugar were put into a 150 liter fermenter and dissolved uniformly. After pasteurizing at 80°C for 10 minutes, the mixture was cooled to 42°C, 0.01% yogurt starter CH-1 (sold by CHR. Hansen Laboratory) was added, and the mixture was fermented for three hours. After fermentation was complete,
2kg of an aqueous solution containing 18 percent highly purified whey proteins obtained by the same method as in Example 1, and 5 kg of strawberry conserves were added, and cooled to 20°C while mixing these in uniformly. The mixture was then poured into 100ml yogurt cups in 90ml amounts. In this way, paste-like fruit yogurt (the proportion of highly purified whey proteins to the total protein in the yogurt was 10.9 percent) was prepared and stored at 5°C in a cooling room. Even after 14 days, the taste and texture of the yogurt were acceptable, and no whey separation was observed.

EXAMPLE 5

Preparation of Highly Purified Whey Proteins

The procedure of Example 1 was repeated except that weakly basic ion exchanger (DEAE-Sephadex A-50 (trade mark; sold by Pharmacia Co.)) was used, and 40g of highly purified whey proteins obtained in powdered form were dissolved in 3000ml of water. Then the procedure of Example 1 was repeated in twice. Thus about 30g of powder containing 92 percent of whey proteins was obtained.

EXAMPLE 6

Preparation of Natural Yogurt

The procedure of Example 3 was repeated except that highly purified whey proteins prepared by the same procedure as used in Example 5 were used. Even after 14 days, the taste and texture of the obtained yogurt were acceptable, and no whey separation was observed.

Having now described the invention, it will be apparent to one of ordinary skill in the art that may changes had modifications can be made thereto without departing from the spirit or scope of the invention as set forth herein.

Table 1

| Sample | Fat (%) | Whey protein(%) | Lactose (%) | Ash (%) | Water (%) |
|---|---|---|---|---|---|
| highly purified whey proteins | 0 | 90 | 3 | 2 | 5 |
| MILACTEAL 75 | 5 | 75 | 12 | 3 | 5 |
| HIPROTAL | 2 | 45 | 47 | 3 | 3 |
| Whey powder | 4 | 12 | 73 | 7 | 4 |

Table 2

| Added whey protins | PERIOD OF STORAGE | | | | | | | | | |
|---|---|---|---|---|---|---|---|---|---|---|
| | immediately after manufacturing | | after 4 days | | after 7 days | | after 10 days | | after 14 dyas | |
| | Taste | Whey separation | Taste | Whey separation | Taste | Whey separation | Taste | Whey separation | Taste | Whey separation |
| sample(nothing added) | Good | +<br>− | Good | + | Good | + | Good | ++ | Good | ++ |
| highly purified whey proteins | Good | − | Good | − | Good | − | Good | − | Good | − |
| MILACTEAL 75 | Good | − | Good | +<br>− | Good | +<br>− | Good | + | Fair | ++ |
| HIPROTAL | Good | +<br>− | Fair | + | Fair | + | Fair | ++ | Poor | ++ |
| Whey powder | Fair | +<br>− | Fair | + | Fair | + | Fair | ++ | Poor | ++ |

NOTE   Whey separation was rated on the following basis: −(none), $\overset{+}{-}$(slight), +(moderate), and ++(considerable separation, and loss of value as merchandise).

EP 0 519 127 A1

Table 3

| Proportion (%) of highly purified whey proteins to total amount of protein in raw material | PERIOD OF STORAGE | | | | | | | | | |
|---|---|---|---|---|---|---|---|---|---|---|
| | immediately after manufacturing | | after 4 days | | after 7 days | | after 10 days | | after 14 days | |
| | Taste | Whey separation | Taste | Whey separation | Taste | Whey separation | Taste | Whey separation | Taste | Whey separation |
| 0 (control) | Good | +<br>- | Good | +<br>- | Good | + | Good | ++ | Good | ++ |
| 0.6 | Good | - | Good | - | Good | +<br>- | Good | + | Good | + |
| 1.5 | Good | - | Good | - | Good | - | Good | - | Good | - |
| 3.0 | Good | - | Good | - | Good | - | Good | - | Good | - |
| 6.0 | Good | - | Good | - | Good | - | Good | - | Good | - |
| 9.0 | Good | - | Good | - | Good | - | Good | - | Good | - |
| 12.0 | Good | - | Good | - | Good | - | Good | - | Good | - |
| 15.0 | Good | - | Good | - | Good | - | Good | - | Good | - |

*NOTE: Whey separation was rated on the following basis: -(none), $\overset{+}{-}$(slight),

+(moderate), and ++(considerable separation, and loss of value as merchandise).

Table 4

| Proportion (%) of highly purified whey proteins to total amount of protein in yogurt | PERIOD OF STORAGE | | | | | | | | | |
|---|---|---|---|---|---|---|---|---|---|---|
| | immediately after manufacturing | | after 4 days | | after 7 days | | after 10 days | | after 14 days | |
| | Taste | Whey separation | Taste | Whey separation | Taste | Whey separation | Taste | Whey separation | Taste | Whey separation |
| 0 (control) | Good | + | Good | + | Good | ++ | Good | ++ | Good | ++ |
| 0.6 | Good | - | Good | + - | Good | + - | Good | + | Good | + |
| 1.5 | Good | - | Good | - | Good | - | Good | - | Good | - |
| 3.0 | Good | - | Good | - | Good | - | Good | - | Good | - |
| 6.0 | Good | - | Good | - | Good | - | Good | - | Good | - |
| 9.0 | Good | - | Good | - | Good | - | Good | - | Good | - |
| 12.0 | Good | - | Good | - | Good | - | Good | - | Good | - |
| 15.0 | Good | - | Good | - | Good | - | Good | - | Good | - |

*NOTE: Whey separation was rated on the following basis: -(none), -+(slight), +(moderate), and ++(considerable separation, and loss of value as merchandise).

## Claims

1. A process for producing a yogurt, characterised in that highly purified whey proteins having a purity of at least 90 percent (by weight) are added to the raw material for production of yogurt or fermented products of said material in an amount comprising at least 0.6 percent (by weight) of total protein content in said material or said products, whereby whey separation in the final product is effectively inhibited.

2. A process as claimed in claim 1 wherein said purified whey proteins are added in powdered form or in solution.

3. A process as claimed in claim 2 wherein in the case of addition to the fermented products of the raw material said purified proteins are added in solution.

4. A process as claimed in any of the preceding claims wherein said purified whey proteins are added in an amount comprising 1.5 to 15 percent (by weight) of the total protein.

5. A process for purifying whey proteins having a purity of at least 90 percent (by weight) comprising the steps of:
   (a) contacting a whey selected from sweet whey, acid whey, whey powder, whey protein concentrate, and mixture thereof, with a weakly acidic cation exchanger having carboxymethyl group, or with weakly basic ion exchanger having a diaminoamylethyl group, to adsorb the protein in the whey to the ion exchanger,
   (b) separating the ion exchanger from the whey,
   (c) washing the ion exchanger with water to remove unadsorbed whey components,
   (d) treating the ion exchanger with a salt solution to elute the whey proteins,
   (e) desalting and concentrating the eluate to obtain highly purified whey proteins.

6. A process as claimed in claim 5 wherein in step (d) the salt is sodium chloride, potassium chloride, magnesium chloride or a mixture thereof.

7. A process as claimed in claim 5 or claim 6 wherein in step (e) the salt concentration is adjusted to 2 percent or less.

8. A process as claimed in claim 1 wherein a purified whey protein prepared by the process of claim 5 is used.

9. Yogurt characterized in that it contains at least 0.6 percent (by weight) of added purified whey proteins having a purity of at least 90 percent (by weight) whereby separation of whey components is inhibited.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 13, no. 494 (C-651)(3842) 8 November 1989 & JP-A-1 196 254 ( SAN EI CHEM IND LTD ) 8 August 1989 * abstract * | 1-2,9 | A23C9/13 |
| Y |  | 8 |  |
| X | AUSTRALIAN JOURNAL OF DAIRY TECHNOLOGY. vol. 33, no. 3, September 1978, PARKVILLE AU pages 97 - 99; R.D. HILL ET AL.: 'The recovery of proteins from cheddar cheese whey by complex formation with carboxymethyl cellulose' * the whole document * | 5-7 |  |
| Y |  | 8 |  |
| X | JOURNAL OF DAIRY SCIENCE. vol. 73, no. 9, September 1990, CHAMPAIGN, ILLINOIS US pages 2292 - 2298; SHIGERU YOSHIDA: 'Isolation of beta-lactoglobulin and alpha-lactalbumin by gel filtration using sephacryl S-200 and purification by diethylaminoethyl ion-exchange chromatography' * the whole document * | 5-7 | TECHNICAL FIELDS SEARCHED (Int. Cl.5) A23C A23J |
| Y |  | 8 |  |
| X | MILCHWISSENSCHAFT. vol. 45, no. 1, 1990, MUNCHEN DE page 61; MEHANNA N.M. ET AL: 'Herstellung von Joghurt aus Milch mit Zusatz von Molkenpulver' * abstract * | 1-2,9 |  |

-/--

The present search report has been drawn up for all claims

| Place of search | Date of completion of the search | Examiner |
|---|---|---|
| BERLIN | 18 FEBRUARY 1992 | ALVAREZ ALVAREZ C. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | MILCHWISSENSCHAFT. vol. 43, no. 11, MUNCHEN DE pages 695 - 698; L. TRATNIK ET AL.: 'Production of fermented beverages from milk with demineralized whey' * page 695 * | 1,9 | |
| A | DEUTSCHE MOLKEREI-ZEITUNG - DMZ. vol. 111, no. 36, 6 September 1990, MUNCHEN DE pages 1144 - 1150; S. KULKARNI ET AL.: 'Einfluss des Kasein/Molkenprotein-Verhältnisses und der Trockenmasseerhöhung durch Molkenkonzentrat auf rheologische und sensorische Eigenschaften von Sahnejoghurt' * page 1144; figure 4 * | 1,9 | |
| A | DEUTSCHE MOLKEREI-ZEITUNG - DMZ. vol. 111, no. 27, 5 July 1990, MUNCHEN DE pages 888 - 893; S. KULKARNI ET AL.: 'Herstellung von Sahnejoghurt unter Einsatz von Molkenkonzentrat -Einflüsse von Prozessparametern-' * page 889, column 1; figure 3 * | 1,9 | TECHNICAL FIELDS SEARCHED (Int. Cl.5 ) |
| A | EP-A-0 184 267 (MELKUNIE HOLLAND B.V.) * page 5, line 10 - line 20; claims 1-4 * | 1,9 | |
| A | US-A-4 293 573 (ROBERT L. BRADLEY JR. ET AL.) * column 3, line 53 - column 4, line 5; claim 1 * | 1,9 | |
| A | MILCHWISSENSCHAFT. vol. 40, no. 8, August 1985, MUNCHEN DE pages 462 - 463; E. RENNER ET AL.: 'Untersuchungen zur Eiweissanreicherung von Joghurt. 2. Einfluss auf die Produktzusammensetzung.' * the whole document * | 1,9 | |

The present search report has been drawn up for all claims

| Place of search | Date of completion of the search | Examiner |
|---|---|---|
| BERLIN | 18 FEBRUARY 1992 | ALVAREZ ALVAREZ C. |

EPO FORM 1503 03.82 (P0401)

European Patent
Office

EUROPEAN SEARCH REPORT

Application Number

EP    91 30 5446
PAGE3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | NETHERLANDS MILK AND DAIRY JOURNAL. vol. 37, no. 1/2, 1983, MEPPEL NL pages 37 - 49; J.N. DE WIT ET AL.: 'Evaluation and functional properties of whey protein concentrates and whey protein isolates. 1. Isolation and characterization.' * the whole document * | 5-7 | |
| A | NETHERLANDS MILK AND DAIRY JOURNAL. vol. 40, no. 1, 1986, MEPPEL NL pages 41 - 56; J.N. DE WIT ET AL.: 'Evaluation and functional properties of whey protein concentrates and whey protein isolates. 2. Effects of processing history and composition.' * the whole document * | 5-7 | |
| A | JOURNAL OF DAIRY SCIENCE. vol. 68, no. 12, December 1985, CHAMPAIGN, ILLINOIS US pages 3176 - 3179; B.MANJI ET AL.: 'Rapid separation of milk whey proteins by anion exchange chromatography' * the whole document * | 5-7 | TECHNICAL FIELDS SEARCHED (Int. Cl.5) |

The present search report has been drawn up for all claims

| Place of search | Date of completion of the search | Examiner |
|---|---|---|
| BERLIN | 18 FEBRUARY 1992 | ALVAREZ ALVAREZ C. |